# EUROPEAN PATENT SPECIFICATION

(11) **EP 2 406 340 B1**
(45) Date of publication and mention of the grant of the patent: **06.03.2013**
(21) Application number: 10713318.3
(22) Date of filing: 10.03.2010
(51) Int. Cl.: C09J 133/00

(54) **IMPROVED ADHESIVE COMPOSITION**
VERBESSERTE KLEBMASSE
COMPOSITION ADHÉSIVE AMÉLIORÉE

(30) Priority: 10.03.2009 EP 09154750
(43) Date of publication of application: 18.01.2012
(73) Proprietor: C-IP S.A., 2310 Luxembourg (LU)
(72) Inventor: CEULEMANS, Olivier, B-2360 Oud-Turnhout (BE); CEULEMANS, Philippe, B-2300 Turnhout (BE)
(74) Representative: Caers, Raphael Frans Ivo
(86) International application number: PCT/EP2010/053051
(87) International publication number: WO 2010/103050

(56) References cited:
- WO-A2-2006/061246

## Description

### FIELD OF THE INVENTION

The present invention relates to an adhesive composition comprising at least one adhesive and at least one rheology modifier, according to the preamble of the first claim.

### BACKGROUND OF THE INVENTION

Adhesive compositions according to this preamble find a.o. application in the manufacturing of corrugated board, which is a multilayer material in which sheets of corrugated cardboard are adhered to flat boards or paper sheets. Adhesion of the corrugated cardboard to the flat sheet is achieved through the application of a strip of an adhesive to the top of the corrugations, followed by subjecting the corrugations to more or less pressure. Aqueous starch based adhesives are very popular in corrugated board production, although their use is often economically unattractive because the typical subsequent step of drying is energy consuming. Other applications of starch based adhesives include the manufacturing of laminated paper or board.

WO 2005/007765 discloses an adhesive composition suitable for the production of corrugated board, which contains a homopolymer of acrylic or methacrylic acid and/or a copolymer of acrylic or methacrylic acid with at least one alkyl acrylate, crosslinked with a polyfunctional vinylidene monomer, as an additive. The additive imparts pseudo plastic properties to the adhesive composition, whose viscosity may be reversibly increased and decreased, while affecting adhesive properties to a minimum extent only. When supplying the adhesive under pressure to the top of the corrugations of corrugated board, the viscosity of the adhesive decreases and an adhesive layer with reduced thickness is applied. Initial viscosity is restored virtually immediately upon removal of the shear forces, which prevents the adhesive from flowing and reduces penetration of the adhesive into the card/paper board, while keeping water penetration to a sufficient level and reducing the risk to the formation of cracks in the corrugated board to a minimum. Incorporation of the additive into an aqueous starch based adhesive is usually done by first diluting the additive with starch or an inert inorganic oxide, and thereafter incorporating the diluted additive into the adhesive composition. Incorporation of the additive of WO 2005/007765 into polyurethane based adhesives usually requires pre-processing of the adhesive into a polyurethane compatible composition.

There is thus a need to a rheology modifier which shows good compatibility and miscibility with a larger variety of adhesives, without requiring extensive pre-processing to provide compatibility.

It is therefore the object of the present invention to provide an adhesive composition which is suitable for use with a wide variety of adhesives.

### SUMMARY OF THE INVENTION

This is achieved according to the present invention with an adhesive composition showing the technical features of the characterising portion of the first claim.

Thereto the adhesive composition of this invention is characterized in that the adhesive composition contains an additive as rheology modifier which is a copolymer of which the monomers are comprising
(i) an alkyl ester of an unsaturated monocarboxylic acid of the formula CH₂=CR-COOH wherein R is a substituent selected from the group consisting of H, a monovalent alkyl, aryl, or alkylaryl radical, a monovalent cyclo alkyl radical, and an alkoxy, haloalkyl or cyanoalkyl group, and
(ii) a C5-C35 alkyl alkoxylated acrylate or methacrylate
or of a mixture of two or more thereof.

The monomers of the copolymer preferably further comprise as a building block (iii) an unsaturated monocarboxylic acid, such as crotonic or cinnamic acid, but preferably of the formula CH₂=CR-COOH, wherein R has the same meaning as in (i).

In another embodiment, the monomers of the copolymer further comprise as a building block (iv) an unsaturated polycarboxylic acid, such as maleic acid, fumaric acid or itaconic acid, or preferably an ester thereof. Preferably this building block is a di-ester of maleic acid, fumaric acid or itaconic acid, more preferably from maleic acid or its anhydride, having the formula A2-O-CO-CH=CH-CO-O-A3, whereby A2 and A3 are individually chosen C1-C35 hydrocarbon groups, preferably comprising at least 4 carbon atoms, more preferably at least 8 carbon atoms.

Preferably, the alkyl ester is a C1-C4 alkyl ester of an unsaturated monocarboxylic acid of the formula CH₂=CR-COOH.

Herein, the preferred alkyl alkoxylated acrylate or methacrylate in (ii) is a C20-C25 alkyl alkoxylated acrylate or methacrylate.

The unsaturated monocarboxylic acid in (i) is preferably selected from the group consisting of acrylic acid and methacrylic acid, and mixtures thereof.

In another embodiment, the unsaturated monocarboxylic acid in (iii) is selected from the group consisting of acrylic acid and methacrylic acid, and mixtures thereof

A preferred copolymer according to the present invention may be a copolymer having the formula (I)

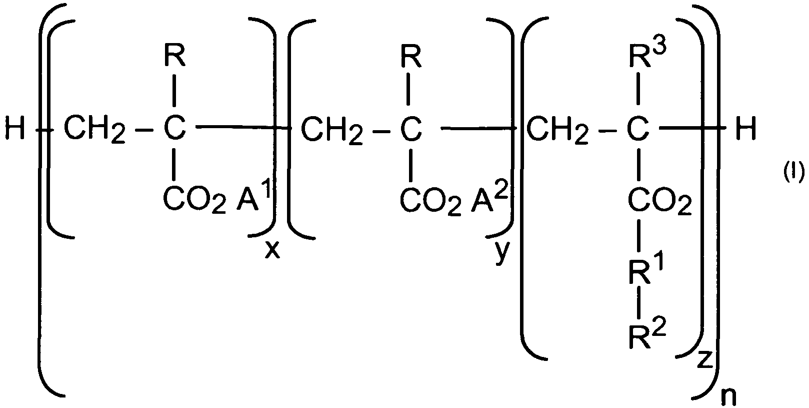

In another embodiment the copolymer according to the present invention is a copolymer having the formula (II).

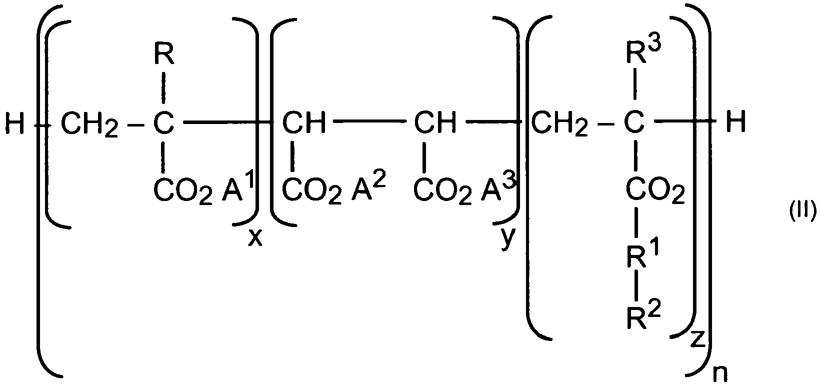

In formulae (I) and (II), z is at least 1, (x + y) : z is from 4 : 1 to 1,000 : 1, preferably from 6 : 1 to 250 : 1; in which the monomer units may be in random order, y preferably being from 0 up to a maximum equal to the value of x; n is at least 1; and further
- R has the meaning specified herein before in (i);
- R¹ represents from 1 to 50 independently selected alkyleneoxy groups preferably ethylene oxide or propylene oxide groups;
- R² represents a C₅-C₃₅ hydrocarbon group; preferably saturated alkyl but possibly containing a phenyl group, in which case we prefer R² to represent a nonyl phenyl or a dodecyl phenyl group;
- R³ represents hydrogen or C₁-C₄ alkyl, preferably H or CH₃;
- A¹, A² and A³ are independently selected from hydrogen and alkyl groups, preferably C₁-C₄ alkyl groups.

The claimed rheology modifier presents the advantage that it is as such miscible with water and does not require extensive pre-processing before showing water compatibility. As a result, the additive as such may be incorporated in water containing adhesive compositions, or it may be diluted with water first, before being incorporated into the adhesive composition.

The miscibility of the additive with water is of particular advantage in the production of corrugated or laminated board, where the additive may now be mixed with the adhesive at the time the adhesive composition is being used, i.e. shortly before application. A small dosing pump may suffice for supplying the additive, even in diluted form, to the adhesive, whereas prior art systems tend to use relatively large and complex supply systems to permit supplying the additive after being diluted in solid starch.

The copolymer according to the above formulae (I) or (II) represent polymers having a hydrophilic backbone and side-chains having a more hydrophobic character. Without being restricted to theory, we believe that these characteristics make the copolymer particularly suitable for the present invention in order to achieve the desired compatibility with the wide range of adhesive systems described herein.

Since dilution of the additive with starch may be dispensed with in the context of the present invention, the solids content of the adhesive composition may be reduced, which is important when processing the composition in terms of minimising the risk for the occurrence of clogging or plugging the process equipment.

Besides that, the additives according to the present invention show good compatibility with a wide variety of adhesives without requiring extensive pre-processing, often without any pre-processing. As such, the additives according to the present invention are suitable for direct incorporation into starch based, polyvinylacetate based, dextrin based and/or polyurethane based adhesive compositions, which now permits extending the application of these adhesives into technical areas which up to now were not or only limitedly available.

### DETAILED DESCRIPTION

The above described additives show pseudo plastic properties, and they appear to be capable of imparting this pseudo plastic behaviour to the adhesive composition containing them, even when present in only a low concentration in the adhesive composition. The presence of the additive has the effect that the viscosity of the adhesive composition changes depending on the shear forces applied to it. In particular, when supplying the adhesive composition under pressure through the supply system, whereby the composition is subjected to higher shear forces, the viscosity of the adhesive composition is reduced, which brings the advantage that the amount of adhesive applied may be reduced while remaining accurately controlled. In case of water based adhesive compositions, less water may thus be supplied and the degree of water penetration may be reduced accordingly, thus reducing the energy requirements for later on evaporating the water supplied with the adhesive, and the risk for the occurrence of steam bubbles upon heating. The presence and contribution of the additive also has the effect that the viscosity is virtually immediately restored upon removing the pressure, and hence the high shear forces. Thus, as soon as the adhesive composition has been applied, an almost instantaneous restauration of the higher viscosity takes place, which prevents the adhesive from flowing away from its point of application, ensures good adhesion and minimizes any penetration of the adhesive into the substrate, which is particularly important when applied to card/paper.

The reduced water transfer and penetration brings the advantage that the paper becomes available for further processing already after a short drying time, thus reducing paper processing times and increasing paper throughput. This is of particular importance in the production of corrugated board and laminated paper, or with tube winding.

The inventor has observed that with the additives according to the present invention the viscosity of the adhesive composition may be reversibly increased and decreased. Thus, any adhesive which has not been transferred from the applicator to the cardboard surface but remains on the applicator, may be recycled and re-used without this adversely affecting the adhesive strength.

The adhesive composition according to the present invention shows good cohesion and minimum tendency for cracking of the adhesive layer, once applied.

The copolymer which is used as the additive preferably has a molecular weight of between 0.05-100 x 10⁹ Dalton, preferably between 0.5-10 x 10⁹ Dalton, more preferably between 1-5 x 10⁹ Dalton. In another embodiment the copolymer has an average molecular weight Mn in the range of 20,000 to 5,000,000, preferably 22,000 to 3,000000, more preferably 24,000 to 2,000,000, and even more preferably around 26,000. The copolymer is preferably cross-linked. The molecular weight is preferably determined by Gel Permeation Chromatography (GPC) with the copolymer dissolved in dimethylacetamide (DMA) and on an analytical system which is calibrated with polymethylmethacrylate reference standards. More preferably the copolymer analysed as such also has, always relative to DMA, an Mw in the range of 50,000 to 5,000,000, preferably 60,000 to 3,000000, more preferably 70,000 to 2,000,000, and even more preferably around 73,000. The polydispersity of the copolymer is preferably in the range of 2-5, more preferably from 2.2 to 4, even more preferably from 2.4 to 3 and yet more preferably from 2.7 to 2.8.

The additive will usually be available as a water based liquid. Similarly, the preferred adhesive composition according to the present invention is liquid.

The monomer in (ii) may be produced starting from an alcohol. We prefer to start from a primary alcohol because of the higher stability it imparts on its derivative. Particularly suitable are C4-C24 primary alcohols obtainable from petrochemical sources through processes such as the hydroformylation of suitable olefins, in which case they may be straight chain or branched chain, or from natural sources through processes such as the hydrogenation of carboxylic acids or esters thereof, for which their methyl esters are very suitable, and in which case the alcohols are usually straight chain. Another suitable starting alcohol is an alkyl substituted phenol, such as octyl phenol, nonyl phenol or dodecyl phenol, and the alkyl group may be straight chain or branched. These alcohols may then be alkoxylated, preferably using ethylene oxide or propylene oxide or a mixture thereof, to form the alkyl alkoxylate, such as e.g. nonyl phenol ethoxylate (NPE) or dodecyl phenol ethoxylate. In a further step, the free OH function which remains at the end of the alkoxylate may then be esterified with the unsaturated monocarboxylic acid, such as (meth)acrylic acid, crotonic acid or cinnamic acid, preferably acrylic acid or methacrylic acid.

The monomer in (iv) may be an ester of maleic acid or fumaric acid, and may be produced by esterifying an alcohol with maleic acid or its anhydride, or with fumaric acid. We prefer to use the di-ester as the monomer. Any alcohol may be suitable for producing this monomer ester derivative, but we prefer to use primary alcohols because of the higher stability they impart on the ester derivative. We prefer to again use the alcohols that are described above as suitable starting materials for the monomer units in (ii).

For the production of the copolymer, any suitable polymerization technique may be employed. We prefer to use a free-radical polymerization technique such as those known in the art, e.g. such as being disclosed in Kirk-Othmer, 5^{th} Edition, Wiley, in volume 20.

Suitable commercially available products for use as the additive in the adhesive composition according to the present invention are available from Sigma Chemical Company, Rohm & Haas for example Acusol(R), Lubrizol for example Carbopol® and Novethix®, from Wako Pure Chemical industries of Japan or from Allied Colloids of Great Britain for example Salcare(R).

The additives according to the present invention have been found to show pseudo plastic behaviour and to impart this property to the adhesive composition containing them, even in case they are present in small amounts only. As only a small amount is needed, the nature of the adhesive composition remains virtually unaffected, as well as its solids content and gelling properties, which is important when processing the composition. The adhesive composition contains the additive in an amount which will usually be at least approximately 0.001 wt %, preferably at least 0.05 wt % with respect to the total weight of the composition. The maximum amount of additive included will usually be less than 5 wt %, preferably less than 1 wt %, more preferably between less than 0.5 wt % with respect to the total weight of the adhesive composition. If so desired, the additive may first be diluted with water or another solvent before addition to the adhesive, to facilitate homogenizing.

The above described additive is suitable for use with a large variety of adhesive compositions, which may be but must not be water-based. Preferably however, the adhesive composition according to the present invention uses as the adhesive component a starch based adhesive composition, a latex polymer adhesive, for example a polyvinyl acetate adhesive, a vinyl acetate ethylene copolymer adhesive, a dextrine or a polyurethane adhesive. In case of a starch based adhesive, use can be made of modified starch or the more common non-modified starch. Examples of suitable starch based adhesive compositions for the adhesive composition according to the present invention include so-called Stein-Hall adhesives, in which starch is present in both gelatinised and non-gelatinised from. A typical Stein-Hall adhesive for the manufacturing of corrugated board contains about 70-75 wt % of water and 30-25 wt % of starch. To this composition preferably about 0.3-0.8 wt % of the additive may be added.

The adhesive composition may further contain an optical clarification agent, to allow controlling the quality of the adhesive composition using UV irradiation.

The adhesive composition according to the present invention is suitable for use in a wide range of applications, for example in the manufacturing of corrugated paper or board, laminated paper or board, tube winding of paper or board, but it is also suitable for use with other materials than paper or board. In particular, the adhesive composition of this invention is suitable for use with wood, metal, and plastic materials and the person skilled in the art will be capable of selecting the appropriate adhesive component for each material with undue burden.

The adhesive composition of the present invention may be applied using any device deemed suitable by the skilled person, preferably such that the adhesive composition may be subjected to pressure and high shear forces during the application to reduce the viscosity of the adhesive composition upon application. A suitable dispensing method includes spraying, whereby the adhesive is atomized into fine droplets and deposited onto the surface of the substrate to form a uniform layer. The adhesive may be atomized by air pressure or by pumping at high pressures through a small orifice, which reduces the viscosity of the adhesive and results therein that a thin coating may be deposited. This technique is particularly suitable for use with irregular surfaces. Another suitable dispensing method includes the use of dispensing nozzles, which are commercially available for a wide variety of adhesives and take many different forms. Usually a needle-type valve blocks the flow of adhesive until pressure is applied which forces the adhesive through a small or fine orifice. Contact nozzles are nozzles which extrude a band of adhesive onto the surface to be coated and may be used when the application of thin stripes or bands is envisaged. Air and electric nozzles may be used for depositing dots or interrupted strips of adhesive. Roll coating is another suitable technique, in particular for rapid application of a controlled adhesive thickness layer onto a large surface area at high speed. Most roll coaters are designed to apply adhesive to a substrate as this passes through the machine. The adhesive is typically held in a reservoir and is applied to the surface of the coating roller. Thereto, the coating roll may dip into the tank, or the adhesive may be pumped from the reservoir and brought into contact with the surface of the coating roll. Once the surface of the coating roll is wetted with the adhesive, excess adhesive may be removed either by a scraper blade or by another roller, leaving a layer of adhesive having a precisely controlled thickness on the roller, which is then applied to the part or substrate.

The present invention also relates to a process for the production of laminated corrugated paper or card board comprising a plurality of superimposed layers of corrugated paper or card connected together by intermittent flat sheets of paper, which process is characterised in that an amount of the above described adhesive composition according to the present invention is applied to the top of the corrugations, the adhesive composition being subjected to pressure upon application, where after the layers are adhered to each other under pressure.

The present invention also relates to a process for the production of compact paper or card board as well as to a process for the production of a laminated paper or card tube, comprising a plurality of superimposed layers of paper or card, which process is characterised in that an amount of the above described adhesive composition according to the present invention is applied to the layers, the adhesive composition being subjected to pressure upon application, where after the layers are adhered to each other under pressure.

The present invention further relates to a laminar paper or card board comprising a plurality of superimposed layers of corrugated paper or card connected together by intermittent flat sheets of paper, which adhere to each other by means of the above described adhesive composition according to the present invention.

The present invention further relates to a compact paper or card board comprising a plurality of superimposed layers of paper or card, which adhere to each other by means of the above described adhesive composition according to the present invention and to a tube of a plurality of tubular wound paper sheets adhering together by means of intermittent layers of the adhesive composition of the present invention.

The adhesive composition of the present invention is also suitable for the manufacturing of laminated paper/card board, honeycomb paper/card board and multi-layer paper/card board comprising a plurality of layers of corrugated paper or card, each layer adhering to a bottom and/or a top layer of a flat liner.

The present invention further relates to a container containing the above described adhesive composition according to the present invention, which container is further provided with an outlet for ejecting the adhesive composition under pressure.

The unsaturated monocarboxylic acid of the formula CH₂=CR-COOH present in the copolymer will generally be one or more monounsaturated carboxylic acid monomers containing 3-12 carbon atoms. Further to a monocarboxylic acid and/or its ester, use may also be made of a polycarboxylic acid and/or its ester as comonomer. In particular, olefinically-unsaturated carboxylic acids containing at least one carbon-carbon olefinic double bond, and at least one carboxyl group are preferred, and/or esters thereof. Suitable examples include acrylic acids, in particular acrylic acid, methacrylic acid, ethacrylic acid, alpha- cyano acrylic acid, beta methylacrylic acid (crotonic acid), alpha-phenyl acrylic acid, beta-acryloxy propionic acid, cinnamic acid, p-chloro cinnamic acid, 1-carboxy-4-phenyl butadiene-1,3, 3-acrylamido-3-methylbutanoic acid, itaconic acid, citraconic acid, mesaconic acid, glutaconic acid, aconitic acid, maleic acid, fumaric acid, and tricarboxy ethylene. Examples of suitable polycarboxylic acids include acid anhydrides, such as maleic anhydride, wherein the anhydride group is formed by the elimination of one molecule of water from two carboxyl groups located on the same carboxylic acid molecule. However, acrylic and methacrylic acid are preferred.

The alkyl alkoxylated acrylate or methacrylate is a hydrophobic co-monomer. The hydrophobic co-monomer will usually be an ester of an acid or a mixture of two or more thereof, and it may include one of the various known (meth)acrylates or (meth)acrylamides.

The alkyl group of the alkyl alkoxylated (meth)acrylate in (ii) will usually contain 5-30 carbon atoms, preferably 15-30, more preferably 20-25 carbon atoms. The alkyl structure can contain primary, secondary, or tertiary carbon configurations. Examples of suitable alkyl alkoxylated acrylates include methoxymethyl acrylate, methoxyethyl acrylate, ethoxyethyl acrylate, butoxyethyl acrylate, or ethoxypropyl acrylate. The alkyl structure may also contain a phenyl group, which may be substituted, and suitable alkyl structures are octylphenyl, nonylphenyl and dodecylphenyl structures, of which the alkoxylated derivatives, such as those containing 1-12 ethoxy and/or propoxy groups are readily commercially available.

The monomers in (i) may be octadecyl acrylate, behenyl acrylate, dodecyl acrylate, hexadecyl acrylate and the like; and cyano derivatives thereof; methacrylates such as steryl methacrylate, methyl methacrylate, ethyl methacrylate, octyl methacrylate, isopropyl methacrylate, 2-ethylhexyl methacrylate, n-hexyl methacrylate, octadecyl methacrylate, behenyl methacrylate, dodecyl methacrylate, hexadecylmethacrylate, and the like. Mixtures of two or three or more long chain acrylic esters may be successfully polymerized with one of the carboxylic acid and/or ester monomers. The preferred hydrophobic monomers are the linear, long chain hydrophobic monomers wherein the alkyl group contains at least 12 carbon atoms, such as stearyl methacrylate, hexadecyl methacrylate, and behenyl methacrylate. Optionally, a complex hydrophobe can be utilized containing polyalkyleneoxide branches capped with hydrophobic alkyl or alkylaryl groups.

For a (meth)acrylic acid ester of an alkoxylated alcohol the alkyl group is typically a C₈-C₂₄ alkyl; alkylaryl, including alkylphenyl groups such as octylphenyl and nonylphenyl; or the residue of a polycyclic hydrocarbyl compound such as lanolin or cholesterol. Suitable alkyl groups -include tridecyl, myristyl, pentadecyl, cetyl, palmityl, stearyl, eicosyl, and behenyl or docosyl or mixtures thereof. Such a suitable monomer mixture may for instance originate from the alkoxylation of a mixture of lauryl, stearyl, cetyl, and palmityl alcohols.

The above-described copolymer is preferably cross-linked. As cross-linking agent, various polyunsaturated monomers may be utilized, whereby either a partially or substantially cross-linked three-dimensional network is obtained. Suitable cross-linking agents include allyl ethers of sucrose or pentaerythritol, or other polyunsaturated monomers for example diallyl esters, dimethallyl ethers, allyl or methallyl acrylates and acrylamides, tetraallyl tin, tetravinyl silane, polyalkenyl methanes, diacrylates and dimethacrylates, divinyl compounds such as divinyl benzene, divinyl glycol, polyallyl phosphate, diallyloxy compounds, phosphite esters, and the like. Typical polyunsaturated monomers include di, tri, or tetra, penta, or hexaallyl sucrose; di, tri, or tetra-allyl pentaerythritol; diallylphthalate, diallyl itaconate, diallyl fumarate, diallylmaleate, divinylbenzene, allylmethacrylate, allyl citrate, ethylene glycol di(meth)acrylate, trimethylolpropane triacrylate, 1,6-hexanediol diacrylate, pentaerythritol triacrylate, tetramethylene diethacrylate, tetramethylene dicarylate, ethylene diacrylate, ethylene dimethacrylate, triethylene glycol methacrylate, methylene bisacrylamide, and the like. Castor oils or polyols, estefied with ethylenically unsaturated carboxylic acid and the like can also be used. Preferred crosslinking agents include allyl pentaerythritol, allyl sucrose, trimethylolpropane allyl ether, and divinyl glycol.

The present invention is how further illustrated by the following examples.

### EXAMPLES

Two Stein-Hall adhesive compositions were prepared according to the formulations shown in Table 1, expressed in weight units. Adhesive composition B is according to the invention and contains an amount of Novethix L-10, which is a copolymer of a C₁-C₄ alkyl ester of acrylic acid, (meth)acrylic acid, and a C₂₂ alkyl alkoxylated (meth)acrylate. Adhesive composition A is comparative and does not contain the Novethix L-10.

**Table 1**

| Formulation | A | B |
|---|---|---|
| Water 1 | 370 | 370 |
| Starch 1 | 35 | 35 |
| NaOH (29%wt) | 5.1 | 5.1 |
| Novethix® L-10 | - | 1 |
| Water 2 | 336 | 336 |
| Starch 2 | 200 | 200 |
| Borax | 2.6 | 2.6 |

In this preparation method, first amounts of Water 1, Starch 1 and NaOH solution are mixed and stirred such that the starch swells up and a gel is obtained, which commonly is called "the carrier". To this gel, secondary amounts of Water 2 and Starch 2, and where appropriate also the Novethix L-10 are mixed in, and the formulation is finished by adding an amount of borax as a stabiliser. The starch used was Native Corn Starch obtained from global starch producer Roquette. The NaOH base used was a commercially available 29%wt solution in water. Novethix L-10 is a copolymer product available from the Lubrizol Corporation. The borax used in the formulation was the sodium tetraborate decahydrate Na₂B₄O₇.10H₂O, which is available from the Borax Company, a member of the Rio Tinto group. The Novethix L-10 copolymer may be described as a copolymer of a simple C₁-C₄ alkyl ester of acrylic acid, (meth)acrylic acid and a C₂₂ alkyl alkoxylated (met)acrylate, and when submitted to Gel Permeation Chromatography (GPC) dissolved in dimethylacetamide (DMA) gave a spectrum showing a broad peak in between a retention window of 22 to 37 minutes which provided the following molecular weight information relative to DMA and on an analytical system that is calibrated with polymethylmethacrylate reference standards: an Mn of 26381, an Mw of 73432, resulting in a polydispersity Mw/Mn of 2.78, an MP of 46696 at a retention time of about 28 minutes, an Mz of 140785 and an Mz+1 of 203801.

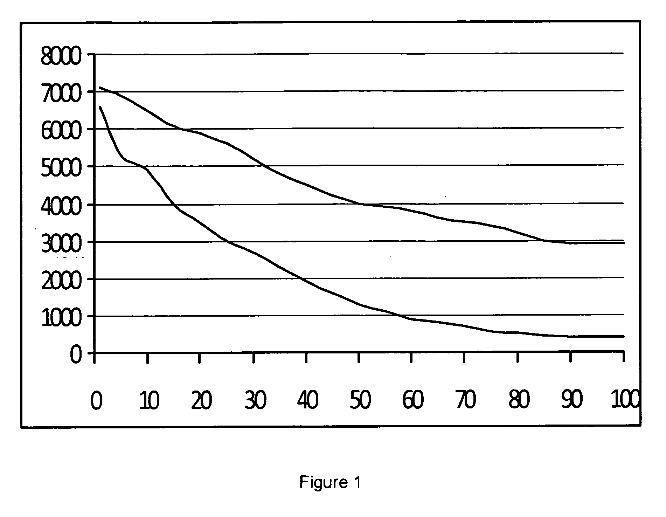

The viscosity -of obtained adhesive compositions A and B were measured under various levels of shear stress in a Brookfield RV apparatus, using spindle 3, and by varying the spindle rotation speed, starting with 1 rpm and 5 rpm and further with steps of 5 rpm up to a final speed of 100 rpm. The measured dynamic viscosities expressed in cP or mPa.s, in function of the spindle rotation expressed as rotations per minute (rpm), are shown in Figure 1, wherein the upper curve shows the viscosities of comparative composition A and the lower curve the viscosities of composition B according to the present invention.

The curves are significantly different and clearly demonstrate the much stronger reduction of viscosity under high shear, up to a full order of magnitude lower at 100 rpm, of the adhesive composition comprising the copolymer in accordance with the present invention as compared to the formulation not containing the copolymer.

Having now fully described this invention, it will be appreciated by those skilled in the art that the invention can be performed within a wide range of parameters within what is claimed, without departing from the spirit and scope of the invention. As understood by those of skill in the art, the overall invention, as defined by the claims, encompasses other preferred embodiments not specifically enumerated herein.

## Claims

1. An adhesive composition comprising at least one adhesive component and at least one rheology modifier, **characterized in that** as the rheology modifier use is made of a copolymer of which the monomers are comprising
(i) an alkyl ester of an unsaturated monocarboxylic acid of the formula CH₂=CR-COOH wherein R is a substituent selected from the group consisting of H, a monovalent alkyl, aryl, or alkylaryl radical, a monovalent cyclo alkyl radical, and an alkoxy, haloalkyl or cyanoalkyl group, and
(ii) a C₅-C₃₅ alkyl alkoxylated acrylate or methacrylate
or of a mixture of two or more thereof.

2. The adhesive composition according to claim 1 wherein the monomers of the copolymer further comprise
(iii) an unsaturated monocarboxylic acid of the formula CH₂=CR-COOH wherein R has the same meaning as in (i),

3. The adhesive composition according to claim 1 or 2 wherein the monomers of the copolymer further comprise
(iv) an unsaturated polycarboxylic acid or an ester thereof.

4. The adhesive composition according to any one of claims 1-3, **characterized in that** as the alkyl ester in (i) use is made of a C₁-C₄ alkyl ester of an unsaturated monocarboxylic acid of the formula CH₂=CR-COOH.

5. The adhesive composition according to any one of claims 1 to 4, **characterized in that** the alkyl alkoxylated acrylate or methacrylate in (ii) is a C₂₀-C₂₅ alkyl alkoxylated acrylate or methacrylate.

6. The adhesive composition as claimed in any one of claims 1-5, **characterized in that** the copolymer is cross-linked and preferably has an average molecular weight Mn determined by GPC in the range of 20,000 to 5,000,000.

7. The adhesive composition as claimed in any one of claims 1-6, **characterized in that** the unsaturated monocarboxylic acid in (i) is selected from the group consisting of acrylic acid and methacrylic acid, and mixtures thereof.

8. The adhesive composition as claimed in any one of claims 2-7, **characterized in that** the unsaturated monocarboxylic acid in (iii) is selected from the group consisting of acrylic acid and methacrylic acid, and mixtures thereof.

9. The adhesive composition as claimed in any one of claims 1-8, **characterized in that** as the adhesive component use is made of a starch based adhesive composition, a polyvinyl alcohol adhesive, a polyvinyl acetate adhesive, a vinyl acetate ethylene copolymer adhesive, a dextrine adhesive, or a polyurethane based adhesive component or a mixture of two or more of the afore mentioned adhesive components.

10. The adhesive composition as claimed in any one of claims 1-9, **characterised in that** the composition contains at least 0.001 wt %, preferably at least 0.05 wt % of the additive, and less than 5 wt %, preferably less than 1 wt %, more preferably less than 0.5 wt % of the additive with respect to the total weight of the adhesive composition.

11. A process for the production of laminated corrugated paper or card board, comprising a plurality of superimposed layers of corrugated paper or card connected together by intermittent flat sheets of paper, **characterised in that** an amount of the adhesive composition according to any one of claims 1-10 is applied to the corrugations, the adhesive being subjected to pressure upon application, where after the layers are adhered to each other under pressure.

12. A paper or card board comprising a plurality of super imposed layers of corrugated paper or card connected together by intermittent flat sheets of paper, **characterised in that** the layers are adhered to each other by means of the adhesive composition as claimed in any one of claims 1-10.

13. A compact paper or card board comprising a plurality of super imposed layers of paper or card, which adhere to each other by means of the adhesive composition of any one of claim 1-10.

14. A process for the production of compact paper or card board comprising a plurality of superimposed layers of paper or card, **characterised in that** an amount of the adhesive composition of any one of claims 1-10 is applied to the layers, the adhesive being subjected to pressure upon application, where after the layers are adhered to each other under pressure.

15. A container containing the adhesive composition according to any one of claims 1-10, which container is further provided with an outlet for ejecting the adhesive composition under pressure.

## Patentansprüche

1. Klebmasse umfassend mindestens eine Klebstoffkomponente und mindestens einen Rheologiemodifikator, **dadurch gekennzeichnet, dass** als Rheologiemodifikator von einem Copolymer Gebrauch gemacht wird, dessen Monomere Folgendes umfassen:
(i) einen Alkylester einer ungesättigten Monocarbonsäure der Formel CH₂=CR-COOH, wobei R ein Substituent ist ausgewählt aus der Gruppe bestehend aus H, einem einwertigen Alkyl-, Aryl- oder Alkylarylradikal, einem einwertigen Cycloalkylradikal und einer Alkoxy-, Haloalkyl- oder Cyanoalkylgruppe und
(ii) ein alkoxyliertes C₅-C₃₅-Alkylacrylat oder -Methacrylat
oder eine Mischung von zwei oder mehreren davon.

2. Klebmasse nach Anspruch 1, wobei die Monomere des Copolymers des Weiteren Folgendes umfassen:
(iii) eine ungesättigte Monocarbonsäure der Formel CH₂=CR-COOH, wobei R dieselbe Bedeutung wie unter (i) besitzt.

3. Klebmasse nach Anspruch 1 oder 2, wobei die Monomere des Copolymers des Weiteren Folgendes umfassen:
(iv) eine ungesättigte Polycarbonsäure oder einen Ester davon.

4. Klebmasse nach einem der Ansprüche 1-3, **dadurch gekennzeichnet, dass** als Alkylester unter (i) Gebrauch gemacht wird von einem C₁-C₄-Alkylester einer ungesättigten Monocarbonsäure der Formel CH₂=CR-COOH.

5. Klebmasse nach einem der Ansprüche 1 bis 4, **dadurch gekennzeichnet, dass** das alkoxylierte Alkylacralyt oder -methacrylat unter (ii) ein alkoxyliertes C₂₀-C₂₅-Alkylacrylat oder - methacrylat ist.

6. Klebmasse nach einem der Ansprüche 1-5, **dadurch gekennzeichnet, dass** das Copolymer vernetzt ist und bevorzugt ein durchschnittliches Molekulargewicht Mn, durch GPC bestimmt, im Bereich von 20.000 bis 5.000.000 aufweist.

7. Klebmasse nach einem der Ansprüche 1-6, **dadurch gekennzeichnet, dass** die ungesättigte Monocarbonsäure unter (i) aus der Gruppe ausgewählt ist bestehend aus Acrylsäure und Methacrylsäure und Mischungen davon.

8. Klebmasse nach einem der Ansprüche 2-7, **dadurch gekennzeichnet, dass** die ungesättigte Monocarbonsäure unter (iii) aus der Gruppe ausgewählt ist bestehend aus Acrylsäure und Methacrylsäure und Mischungen davon.

9. Klebmasse nach einem der Ansprüche 1-8, **dadurch gekennzeichnet, dass** als Klebstoffkomponente Gebrauch gemacht wird von einer Klebmasse auf Stärkebasis, einem Polyvinylalkoholklebstoff, einem Polyvinylacetatklebstoff, einem Vinylacetat-Ethylen-Copolymerklebstoff, einem Dextrinklebstoff oder einer Klebstoffkomponente auf Polyurethanbasis oder einer Mischung von zwei oder mehreren der oben erwähnten Klebstoffkomponenten.

10. Klebmasse nach einem der Ansprüche 1-9, **dadurch gekennzeichnet, dass** die Zusammensetzung mindestens 0,001 Gew.-%, bevorzugt mindestens 0,05 Gew.-% des Zusatzmittels und weniger als 5 Gew.-%, bevorzugt weniger als 1 Gew.-%, noch bevorzugter weniger als 0,5 Gew.-% des Zusatzmittels, auf das Gesamtgewicht der Klebmasse bezogen, enthält.

11. Verfahren für die Herstellung von laminierter Wellpappe oder Karton, umfassend mehrere übereinanderliegende Lagen von Wellpappe oder Pappe, die durch dazwischenliegende flache Blatt Papier verbunden sind, **dadurch gekennzeichnet, dass** eine Menge der Klebmasse nach einem der Ansprüche 1-10 auf die Wellen aufgebracht wird, wobei der Klebstoff auf das Aufbringen hin Druck ausgesetzt wird, woraufhin die Lagen unter Druck an einander befestigt werden.

12. Papier oder Karton, umfassend mehrere übereinanderliegende Lagen von Wellpappe oder Pappe, die durch dazwischenliegende flache Blatt Papier verbunden sind, **dadurch gekennzeichnet, dass** die Lagen durch die Klebmasse nach einem der Ansprüche 1-10 an einander befestigt sind.

13. Kompaktes Papier oder kompakter Karton umfassend mehrere übereinanderliegende Lagen von Papier oder Pappe, die durch die Klebmasse nach einem der Ansprüche 1-10 aneinander befestigt sind.

14. Verfahren für die Herstellung von kompaktem Papier oder Karton, umfassend mehrere übereinanderliegende Lagen von Papier oder Pappe, **dadurch gekennzeichnet, dass** eine Menge der Klebmasse nach einem der Ansprüche 1-10 auf die Lagen aufgebracht wird, wobei der Klebstoff auf das Aufbringen hin Druck ausgesetzt wird, woraufhin die Lagen unter Druck an einander befestigt werden.

15. Behälter enthaltend die Klebmasse nach einem der Ansprüche 1-10, welcher Behälter des Weiteren mit einem Auslass zum Ausstoßen der Klebmasse unter Druck ausgestattet ist.

## Revendications

1. Composition adhésive comprenant au moins un composant adhésif et au moins un modificateur de rhéologie, **caractérisé en ce qu'**il est fait usage comme modificateur de rhéologie d'un copolymère dont les monomères comprennent :
(i) un ester d'alkyle d'un acide monocarboxylique insaturé de la formule CH₂=CR-COOH dans laquelle R est un substituant sélectionné dans le groupe consistant en H, un radical alkyle, aryle ou alkylaryle monovalent, un radical cycloalkyle monovalent et un groupe alcoxy, haloalkyle ou cyanoalkyle, et
(ii) un acrylate ou méthacrylate alcoxylé d'alkyle en C₅-C₃₅
ou un mélange de deux ou de plus de deux de ceux-ci.

2. Composition adhésive selon la revendication 1 dans laquelle les monomères du copolymère comprennent en outre
(iii) un acide monocarboxylique insaturé de la formule CH₂=CR-COOH dans laquelle R a la même signification que dans (i).

3. Composition adhésive selon la revendication 1 ou 2 dans laquelle les monomères du copolymère comprennent en outre
(iv) un acide polycarboxylique insaturé ou un ester de celui-ci.

4. Composition adhésive selon l'une quelconque des revendications 1 - 3, **caractérisée en ce qu'**il est fait usage comme ester d'alkyle en (i) d'un ester d'alkyle en C₁-C₄ d'un acide monocarboxylique insaturé de la formule CH₂=CR-COOH.

5. Composition adhésive selon l'une quelconque des revendications 1 à 4, **caractérisée en ce que** l'acrylate ou le méthacrylate alcoxylé d'alkyle en (ii) est un acrylate ou méthacrylate alcoxylé d'alkyle en C₂₀-C₂₅.

6. Composition adhésive telle que revendiquée dans l'une quelconque des revendications 1 - 5, **caractérisée en ce que** le copolymère est réticulé et a de préférence un poids moléculaire moyen Mn déterminé par GPC dans la plage de 20.000 à 5.000.000.

7. Composition adhésive telle que revendiquée l'une quelconque des revendications 1 - 5, **caractérisée en ce que** l'acide monocarboxylique insaturé en (i) est sélectionné dans le groupe consistant en acide acrylique et acide méthacrylique et des mélanges de ceux-ci.

8. Composition adhésive telle que revendiquée dans l'une quelconque des revendications 2 - 7, **caractérisée en ce que** l'acide monocarboxylique insaturé en (iii) est sélectionné dans le groupe consistant en acide acrylique et acide méthacrylique et des mélanges de ceux-ci.

9. Composition adhésive telle que revendiquée dans l'une quelconque des revendications 1 - 8, **caractérisée en ce qu'**il est fait usage comme composant adhésif d'une composition adhésive à base d'amidon, d'un adhésif d'alcool polyvinylique, d'un adhésif d'acétate de polyvinyle, d'un adhésif copolymère d'acétate de vinyle-éthylène, d'un adhésif de dextrine, ou d'un composant adhésif à base de polyuréthane ou d'un mélange de deux ou de plus de deux des composants adhésifs mentionnés ci-dessus.

10. Composition adhésive telle que revendiquée dans l'une quelconque des revendications 1 - 9, **caractérisée en ce que** la composition contient au moins 0,001 % en poids, de préférence au moins 0,05 % en poids de l'additif, et moins de 5 % en poids, de préférence moins de 1 % en poids, mieux encore moins de 0,5 % en poids de l'additif par rapport au poids total de la composition adhésive.

11. Procédé pour la production de papier ou carton ondulé stratifié, comprenant une pluralité de couches superposées de papier ou carton ondulé reliées ensemble par des feuilles plates intermittentes de papier, **caractérisé en ce qu'**une quantité de la composition adhésive selon l'une quelconque des revendications 1-10 est appliquées sur les ondulations, l'adhésif étant soumis à une pression lors de l'application, après quoi les couches sont collées les unes aux autres sous pression.

12. Papier ou carton comprenant une pluralité de couches superposées de papier ou carton ondulé reliées les unes aux autres par des feuilles plates intermittentes de papier, **caractérisé en ce que** les couches sont collées les unes aux autres au moyen de la composition adhésive telle que revendiquée dans l'une quelconque des revendications 1-10.

13. Papier ou carton compact comprenant une pluralité de couches superposées de papier ou carton qui sont collées les unes aux autres au moyen de la composition adhésive de l'une quelconque des revendications 1-10.

14. Procédé pour la production de papier ou carton compact comprenant une pluralité de couches superposées de papier ou carton, **caractérisé en ce qu'**une quantité de la composition adhésive de l'une quelconque des revendications 1-10 est appliquée sur les couches, l'adhésif étant soumis à une pression lors de l'application, après quoi les couches sont collées les unes aux autres sous pression.

15. Récipient contenant la composition adhésive selon l'une quelconque des revendications 1-10, lequel récipient est en outre pourvu d'une sortie pour éjecter la composition adhésive sous pression.
